# EUROPÄISCHE PATENTSCHRIFT

(11) **EP 0 542 800 B1**
(45) Veröffentlichungstag und Bekanntmachung des Hinweises auf die Patenterteilung: **21.06.1995**
(21) Anmeldenummer: 91913965.9
(22) Anmeldetag: 28.07.1991
(51) Int. Cl.: C08J 9/35, C08J 11/04

(54) **WIEDERGEWINNUNG VON SCHAUMSTOFFRESTEN UND/ODER SCHAUMSTOFFABFÄLLEN**
RECLAIMING OF FOAM OFF-CUTS AND/OR WASTE FOAM
RECUPERATION DE RESTES DE MOUSSES ET/OU DE DECHETS DE MOUSSES

(30) Priorität: 08.08.1990 DE 4025102
(43) Veröffentlichungstag der Anmeldung: 26.05.1993
(73) Patentinhaber: APS WELSCH & PARTNER GmbH, 52146 Würselen (DE)
(72) Erfinder: WELSCH, Christian, D-5102 Würselen (DE); LAMBERTZ, Ingrid, D-5000 Köln 41 (DE)
(86) Internationale Anmeldenummer: EP9101417
(87) Internationale Veröffentlichungsnummer: WO9202575

(56) Entgegenhaltungen:
- GB-A- 2 116 572
- GB-A- 2 125 422
- US-A- 3 114 722
- US-A- 4 438 221
- Chemical Abstracts, Band 106, no. 19, 11 Mai 1987, (Columbus, Ohio, US), siehe Seite 724, Zusammenfassng 156816p, & JP A 61272249

## Beschreibung

Die Erfindung betrifft ein Verfahren zur Wiedergewinnung von Schaumstoffresten und/oder Schaumstoffabfällen durch Einbetten der Reste und/oder Abfälle in eine neue aufgeschäumte Matrix.

Schaumstoffe im Sinne der vorliegenden Erfindung sind beispielsweise in Ullmanns Enzyclopädie der technischen Chemie, 4. Auflage, Band 20, Seide 415-432 beschrieben. Demnach sind Schaumstoffe Zweiphasensysteme auf der Basis von hochpolymeren, organischen Werkstoffen als Matrix. Hauptanwendungsgebiet ist der Bausektor, auf dem die Schaumstoffe als solche oder in Sandwich-Kombination mit anderen Werkstoffen zur Wärmedämmung, Schallisolierung oder Fugenabdichtung verwendet werden. Dank der guten Polstereigenschaften und des Widerstandes gegen Stoßbeanspruchung sind Schaumstoffe auch sehr gute Packstoffe, insbesondere für hochempfindliche Güter. Neben sogenannten Blockschäumen werden auch unverschweißte, lose Partikel in größerem Umfang verwendet, beispielsweise als Zuschlagstoff für Porotonziegel.

Bei der Herstellung und Verarbeitung von Schaumstoffen fallen naturgemäß mehr oder weniger große Mengen an Schaumstoffresten und/oder Schaumstoffabfällen an, deren Wiedergewinnung problematisch ist. Nach Ullmann, loc. cit. S. 425 ist bekannt, Schaumstoffabfälle auf der Basis von expandierbarem Polystyrol, das in den Produktionsbetrieben anfällt, zur Wiederverwendung zu mahlen, mit vorgeschäumten Perlen zu vermischen und dem Aufschäumprozeß wieder zuzuführen. Diese Wiedergewinnung ist jedoch nicht für alle Schaumstoffreste und/oder Schaumstoffabfälle gleichermaßen einsetzbar, da häufig durch die Zuführung der Reste und/oder Abfälle die Qualität des gewünschten Produkts verschlechtert wird.

Aus DE-A-35 30 754 ist ein Verfahren zur Herstellung von Polyurethan-Hartschaumstoffen bekannt, die neben üblichen Additiven noch 5 bis 75 Gew.-%, bezogen auf das Gesamtgewicht, Kunststoffteilchen - insbesondere aus Recycling-Material - enthalten. Als Kunststoff-Recycling-Material werden alte Tüten, Behälter, Gehäuse und Kunstfasern genannt, die zweckmäßig in Form eines (flockigen, noch nicht verdichteten) Agglomerats oder eines (körnigen) Regenerats eingesetzt werden.

Die US-A-3 114 722 beschreibt ein Verfahren zur Wiederverwendung von geschreddertem expandierten Kunststoffmaterial zur Herstellung von Formkörpern, bei denen offenzellige Schaumflocken mit einer wäßrigen Lösung eines Katalysators in Kontakt gebracht werden. Der Katalysator ist geeignet, eine Reaktion zwischen Isocyanatgruppen und Wasser zu initiieren. Bedingt durch die Absorption des Wassers und des Katalysators in dem geschredderten Material ist bei Raumtemperatur keine merkliche Reaktionsgeschwindigkeit zu beobachten. Erst durch Erwärmung beschleunigt sich die Reaktion.

Aufgabe der vorliegenden Erfindung ist somit ein Verfahren zur Wiedergewinnung von Schaumstoffresten und/oder Schaumstoffabfällen, das die genannten Reste und/oder Abfälle insbesondere beim Hersteller von Verpackungsmaterial einer einfachen Verwertung zuganglich macht. Weitere Aufgabe der vorliegenden Erfindung ist die Vermeidung von Müll und damit verbunden eine Einsparung an Deponiekosten bei der bisher häufig durchgeführten Entsorgung.

Die vorstehend genannten Aufgaben werden gelöst durch Ein Verfahren zur Wiedergewinnung von Schaumstoffresten und/oder Schaumstoffabfällen durch
(a) mechanisches Zerkleinern der Schaumstoffreste und/oder Schaumstoffabfälle auf eine Partikelgröße von weniger oder gleich 10 mm;
(b) Vermengen der Schaumstoffreste und/oder Schaumstoffabfälle mit einem flüssigen, schaumbildenden Einkomponenten-Prepolymeren in einem Verhältnis von Schaumstoffresten und/oder Schaumstoffabfällen zu Prepolymeren im Bereich von 95 bis 80 : 5 bis 20 Vol.-%;
(c) Entfernung von gegebenenfalls vorhandenem überschüssigem, nicht benetzendem Prepolymeren;
(d) Starten der Polymerisationsreaktion des Prepolymers durch Einrühren von Wasser in einem Gewichtsverhältnis von Wasser zu Prepolymeren im Bereich von 0,5 bis 2,5 : 1 unter Homogenisierung des Gemisches und
(e) Ausschäumen in der gewünschten Form.

Mit Hilfe des erfindungsgemäßen Verfahrens ist die Verwertung von Schaumstoffresten und/oder Schaumstoffabfällen möglich, die beispielsweise bei der Herstellung von Spezialverpackungen als Überstände entfernt wurden. Auch kann mit Hilfe der vorliegenden Erfindung sowohl offenzelliges als auch geschlossenzelliges (vernetztes) Schaumstoffmaterial einer geeigneten Wiederverwendung zugeführt werden.

Notwendiges Merkmal der Erfindung ist die sorgfältige Zerkleinerung der Schaumstoffreste und/oder Schaumstoffabfälle auf eine Partikelgröße von weniger oder gleich 10 mm. Verfahren zur mechanischen Zerkleinerung sind dem Fachmann bekannt. Da bekanntermaßen die Oberfläche der Partikel bei einer Verringerung der Teilchengröße zunimmt, ist eine möglichst geringe Partikelgröße erwünscht, da hierdurch eine bessere Oberflächenbindung zwischen den Schaumstoffresten und/oder Schaumstoffabfällen und dem flüssigen, schaumbildenden Einkomponenten-Prepolymeren erzielt wird. In einer bevorzugten Ausführungsform der vorliegenden Erfindung werden daher die Schaumstoffreste und/oder Schaumstoffabfälle auf eine Partikelgröße von weniger oder gleich 5 mm zerkleinert.

Die chemische Zusammensetzung der Schaumstoffreste und/oder Schaumstoffabfälle im Sinne der vorliegenden Erfindung ist weniger kritisch. Die hauptsächlichen Vertreter der Schaumstoffe sind aus Ullmanns, loc. cit., bekannt und umfassen insbesondere Polystyrol, Polyvinylchlorid, Polyethylen, Harnstoff-Formaldehydharz, Phenol-Formaldehyd-Harz, Silicon-Harz und/oder deren Gemische.

Die größte Verbreitung bei den Schaumstoffen finden bekanntermaßen Polystyrol und Polyethylen, so daß die Wiedergewinnung von Schaumstoffresten und/oder Schaumstoffabfällen von Polystyrol und/oder Polyethylen im Sinne der vorliegenden Erfindung besonders bevorzugt ist. Mit Hilfe des erfindungsgemäßen Verfahrens lassen sich beispielsweise Polyethylenreste und/oder Polyethylenabfälle zu neuen Produkten verarbeiten, die praktisch die gleichen Eigenschaften haben, wie die Ausgangsmaterialien. Die Einsparung von Kosten für die Entsorgung geht daher mit der Verringerung der Abfallmenge einher.

Das Vermengen der Schaumstoffreste und/oder Schaumstoffabfälle mit dem flüssigen, schaumbildenden Einkomponenten-Prepolymeren kann beispielsweise durch Einrühren des Prepolymeren in die mechanisch zerkleinerten Schaumstoffreste und/oder Schaumstoffabfälle erfolgen. Obwohl die Temperatur bei diesem sowie auch den folgenden Schritten nicht von besonderer Bedeutung ist, ist doch empfehlenswert, die Vermengung bei Raumtemperatur, insbesondere unter Vermeidung von Erwärmung, durchzuführen, um eine vorzeitige Polymerisationsreaktion zu vermeiden.

Im Anschluß an die Vermengung der Schaumstoffreste und/oder Schaumstoffabfälle mit dem flüssigen, schaumbildenden Einkomponenten-Prepolymeren wird überschüssiges, nicht benetzendes Prepolymer entfernt. Dies kann beispielsweise durch Abtropfenlassen, Abstreifen oder Abpressen des Prepolymeren durchgeführt werden. Hierdurch kann der Materialeinsatz an Prepolymeren soweit wie möglich reduziert werden, so daß das Prepolymere beim fertigen Produkt praktisch nur als Haftvermittler zwischen den zerkleinerten Partikeln der Schaumstoffreste und/oder Schaumstoffabfälle dient. Für den Fall, daß von vornherein eine geringere Menge an Prepolymeren eingesetzt wird, kann die Entfernung von überschüssigem, nichtbenetzendem Prepolymeren entfallen, wenn eine ausreichend gute Haftverbindung zwischen den Partikeln der Schaumstoffreste und/oder Schaumstoffabfälle erzielt wird. Dies kann beispielsweise dadurch erreicht werden, daß man die zerkleinerten Partikel der Schaumstoffreste und/oder Schaumstoffabfälle intensiv mit dem flüssigen, schaumbildenden Einkomponenten-Prepolymeren bei Raumtemperatur oder sogar verminderter Temperatur, gegebenenfalls unter Feuchtigkeitsausschluß, verrührt und so eine möglichst vollständige Benetzung der Oberfläche der Partikel erreicht.

Das Volumenverhältnis von Schaumstoffresten und/oder Schaumstoffabfällen zum Prepolymeren ist prinzipiell nicht kritisch. Im Sinne der Wiedergewinnung von Schaumstoffresten und/oder Schaumstoffabfällen ist jedoch der Einsatz einer möglichst geringen Menge an Prepolymeren erwünscht. Eine Mindestmenge an Prepolymeren ist jedoch erforderlich, um eine ausreichende Haftverbindung zwischen den zerkleinerten Partikeln der Schaumstoffreste und/oder Schaumstoffabfälle zu gewährleisten. Im Sinne der vorliegenden Erfindung wird daher ein Verhältnis von Schaumstoffresten und/oder Schaumstoffabfällen zu Prepolymeren im Bereich von 95 bis 80 : 5 bis 20 Vol.-%. Oberhalb von 95 Vol.-% Anteil an Schaumstoffresten und/oder Schaumstoffabfällen ist eine ausreichende Haftverbindung zwischen den einzelnen Partikeln kaum gewährleistet. Die vorstehend genannten Angaben beziehen sich auf die eingesetzten Mengen an Schaumstoffresten und/oder Schaumstoffabfällen und flüssigem, noch ungeschäumtem Einkomponenten-Prepolymeren, so daß im erhaltenen Endprodukt die Volumenanteile an Schaumstoffresten und/oder Schaumstoffabfällen geringer sind. Eine Einsatzmenge von 95 % Schaumstoffresten und/oder Schaumstoffabfällen bei der Fertigung entspricht einem Volumenanteil im Endprodukt von etwa 80 Vol.-%.

Erfindungsgemäß wird die Polymerisationsreaktion des flüssigen, schaumbildenden Einkomponenten-Prepolymeren durch Einrühren von Wasser unter Homogenisierung des Gemisches gestartet. Die Verwendung von Schaumstoffresten und/oder Schaumstoffabfällen mit einer spezifischen Dichte geringer als Wasser erfordert meist ein intensives Rühren zur Homogenisierung, da leichtere Schaumstoffbestandteile sonst aufschwimmen und somit ein nicht homogenes Endprodukt ergeben. Aufgrund der Wasserunlöslichkeit der Schaumstoffreste und/oder Schaumstoffabfälle und des Einkomponenten-Prepolymeren wird selbstverständlich ein heterogenes Zweiphasensystem erhalten, dessen Kontinuität vornehmlich durch das Einrühren von Wasser bestimmt wird. Die Verwendung des Begriffs "Homogenisierung" im Sinne der vorliegenden Erfindung bedeutet somit nicht die Herstellung eines einphasigen Reaktionssystems, sondern lediglich die Bildung eines möglichst kontinuierlichen Systems.

Durch die Reaktion des Prepolymeren mit Wasser beginnt das Gemisch innerhalb von kurzer Zeit aufzuschäumen. Üblicherweise ist die Schäumungsreaktion in wenigen Minuten beendet. Es ist daher möglich, die Schäumungsreaktion in offenen oder geschlossenen Systemen durchzuführen. Derartige Schäumungstechniken sind den Fachmann bekannt, beispielsweise der Zusatz von weiteren Treibmitteln, die Einstellung der Eigenschaften des erhaltenen Produkts, beispielsweise durch Auswahl und Menge eines gegebenenfalls zusätzlich zugesetzen Treibmittels, die Ausrüstung als normal oder schwer entflammbare Schaumstoffmaterialien.

In einer besonderen Ausführungsform der vorliegenden Erfindung wird als flüssiges, schaumbildendes Einkomponenten-Prepolymer ein Einkomponenten-Polyurethansystem eingesetzt. Derartige Einkomponenten-Polyurethane sind seit langem bekannt und sind beispielsweise unter der Bezeichung "Hypol^{R}" im Handel erhältlich. Bei den erfindungsgemäß einzusetzenden Einkomponenten-Polyurethansystemen handelt es sich vorzugsweise um schaumbildende hydrophile Polyurethan-Prepolymeren auf der Basis von Toluylen-Diisocyanat (TDI). Diese reagieren bekanntermaßen mit protischen (aktiven Wasserstoff enthaltenden) Verbindungen unter Bildung von elastomeren Schäumen oder Beschichtungen ohne Einsatz von Katalysatoren. Darüber hinaus ist bekannt, daß in derartige Prepolymere auch weitere Komponenten eingebracht werden können, beispielsweise Abrasiva, Medikamente, Detergentien, Flammschutzmittel, Absorbentien, Pigmente, Keramiken, Textilien sowie auch Schaumstoffe. Der Ansatzpunkt der vorliegenden Erfindung ist jedoch die Bereitstellung eines Verfahrens zur Wiedergewinnung von Schaumstoffresten und/oder Schaumstoffabfällen, so daß die Menge an einzusetzendem Prepolymeren möglichst gering gehalten werden soll, während die oben genannten Zusatzstoffe zum Prepolymeren die Eigenschaften des Endprodukts maßgebend bestimmen sollen. Die üblicherweise verwendeten Mengen dieser Zusatzstoffe liegen daher im. allgemeinen weit unter den Anteilen, die erfindungsgemäß durch die Schaumstoffreste und/oder Abfälle umfaßt werden.

Der Einsatzort der genannten zusätzlichen Bestandteile im Sinne der vorliegenden Erfindung ist weniger kritisch. Diese können entweder schon bei der Zerkleinerung der Schaumstoffreste und/oder Schaumstoffabfälle, dem Prepolymeren vorher oder während der Vermengung mit den Schaumstoffresten und/oder Schaumstoffabfällen sowie dem Wasser vor oder während des Einrührens von Wasser zugegeben werden. Eine besondere Ausführungsform der vorliegenden Erfindung ist daher daduch gekennzeichnet, daß den Schaumstoffresten und/oder Schaumstoffabfällen und/oder dem Prepolymeren und/oder dem Wasser Abrasiva, Flammverzögerer, Pigmente, Fasern, Faserreste und/oder Detergentien in einer Menge von 0,1 bis 10 Gew.-%, bezogen auf das Endprodukt, zugesetzt werden. In einer darüber hinaus bevorzugten Ausführungsform wird als Detergens Kernseife in einer Menge von 0,5 Gew.-%, bezogen auf das Endprodukt, dem Einkomponenten-Prepolymeren zugesetzt. Dieses Detergens wird vorteilhafterweise dem. Wasser zugesetzt und verbessert die Benetzungseigenschaften des Prepolymeren, wodurch die Verbindung zwischen Schaumstoffresten und/oder Schaumstoffabfällen und dem Prepolymeren gefestigt wird.

Obwohl das Gewichtsverhältnis von Wasser zu Prepolymeren weniger kritisch ist, wird erfindungsgemäß ein Gewichtsverhältnis von Wasser zu Prepolymeren im Bereich von 0,5 bis 2,5 : 1 eingestellt. Gewichtsverhältnis von Wasser zu Prepolymeren im Bereich von 1 bis 1,5 : 1 werden vorzugsweise eingestellt, wenn das Einkomponenten-Prepolymer als Bindemittel eingesetzt wird und eine minimale Schaumentwicklung gewünscht ist.

Gewichtsverhältnisse von Wasser zu Polymeren im Bereich von weniger oder gleich 1 : 1 können in vielen Fällen die Schaumqualität durch reduzierte Trockenzeiten und Energiekosten reduzieren. Verhältnisse von
Wasser : Polymeren im Bereich unterhalb von
0,5 : 1 erhöhen den Anteil an geschlossenzelligem Schaum.

Ein wesentlicher Vorteil der vorliegenden Erfindung besteht darin, daß bei dem erfindungsgemäßen Verfahren keine organischen Lösungsmittel eingesetzt werden. Beim Einsatz von Polyethylen als Ausgangsmaterial lassen sich mit Hilfe des erfindungsgemäßen Verfahrens Stauchhärten erzielen, die denen der ursprünglichen Produkte entsprechen. Selbstverständlich sind durch Abmischungen verschiedener Schaumstoffreste und/oder Schaumstoffabfälle unterschiedlicher chemischer Zusammensetzung die Eigenschaften des gewünschten Produktes beliebig steuerbar.

### Beispiele

### Beispiel 1

200 ml Polystyrolschaum mit einer Rohdichte von 15 kg/m³ (PS 15) wurden auf eine Partikelgröße von ca. 10 mm Kantenlänge kaltmechanisch zerkleinert. Bei Raumtemperatur (21 °C) wurden 20 ml Einkomponenten-Prepolymeres (Hypol^{R}-Grace-Einkomponenten-Polyurethan) in die Masse gegeben und vermengt, bis alle Bruchstücke an der Oberfläche benetzt waren. Anschließend wurden 40 ml Leitungswasser zugegeben und gleichmäßig untergerührt, bis die Masse begann, eine milchige Eintrübung zu zeigen. Es wurde in einen Schaumbehälter umgefüllt und im offenen Zustand ausreagieren lassen. Nach etwa 3 min wurde die Entformung durchgeführt.

Das geschäumte Volumen betrug 450 ml, die Schrumpfung nach 120 min lediglich 30 ml, entsprechend 6,6 %. Die Schäumung verlief gleichmäßig; die Form wurde voll ausgeschäumt. Die Polystyrolpartikel sind fest in die Polyurethanmatrix eingebunden.

### Beispiel 2

Ca. 1 g Kernseife wurde feinstgemahlen und mit 30 ml Einkomponenten-Prepolymerem (Hypol^{R}-Grace-Einkomponenten-Polyurethan) verrührt.

200 ml Polystyrolschaum mit einer Rohdichte von 15 kg/m³ (PS 15) wurde auf eine Partikelgröße von etwa 5 mm Kantenlänge kaltmechanisch zerkleinert. Das Tensid enthaltende Einkomponenten-Prepolymere wurde zu den gemahlenen Schaumpartikeln gegeben und bei Raumtemperatur vermengt, bis alle Bruchstücke an der Oberfläche benetzt waren.

Die so erhaltene Masse wurde auf ein Metallsieb gestellt und der Überschuß 5 min abtropfen gelassen. Der abgetropfte Überschuß betrug etwa 10 ml.

Anschließend wurde die Masse mit 40 ml Leitungswasser bei Raumtemperatur versetzt und gleichmäßig untergerührt, bis die Masse begann, eine milchige Eintrübung zu zeigen. Es wurde in den Schaumbehälter umgefüllt und im offenen Zustand ausreagieren lassen. Nach etwa 3 min wurde die Entformung durchgeführt.

Das geschäumte Volumen betrug 650 ml, die Schrumpfung nach 120 min 60 ml, entsprechend 9,23 %. Die Schäumung verlief gleichmäßig, die Form wurde voll ausgeschäumt. Die Haftung zwischen Einkomponenten-Prepolymerem und Polystyrolpartikeln war ausreichend, die Polystyrolpartikel sind fest eingebettet. Im Schaum befinden sich größere Luftlöcher, das Material ähnelt einem Gitter.

### Vergleichsbeispiel

200 ml Polyethylenschaum (Neopolen^{R} 1710, BASF PE 35) wurden auf eine Partikelgröße von ca. 20 mm Kantenlänge kaltmechanisch zerkleinert. Zu der Masse wurden 20 ml eines Einkomponenten-Prepolymeren (Hypol^{R}-Grace-Einkomponenten-Polyurethan) bei Raumtemperatur gegeben und vermengt, bis alle Bruchstücke an der Oberfläche benetzt waren.

40 ml Leitungswasser wurden zugegeben und gleichmäßig untergerührt, bis die Masse begann, eine milchige Eintrübung zu zeigen. Es wurde in einen Schaumbehälter umgefüllt und im offenen Zustand ausreagieren gelassen. Nach etwa 3 min wurde die Entformung durchgeführt.

Das geschäumte Volumen betrug 0,5 l, die Schrumpfung nach 120 min 0,04 l, entsprechend 8 %. Die Schäumung verlief gleichmäßig, die Form wurde voll ausgeschäumt. Es trat ein Dichtegradient auf. Am Boden der Form konnte ein höherer Anteil an Einkomponenten-Prepolymeren als am oberen Teil der Form beobachtet werden. Eine Haftung zwischen dem Prepolymeren und den Schaumstoffpartikeln konnte nur teilweise beobachtet werden. Schaumstoffstücke ließen sich leicht auslösen.

## Patentansprüche

1. Verfahren zur Wiedergewinnung von Schaumstoffresten und/oder Schaumstoffabfällen durch
(a) mechanisches Zerkleinern der Schaumstoffreste und/oder Schaumstoffabfälle auf eine Partikelgröße von weniger oder gleich 10 mm;
(b) Vermengen der Schaumstoffreste und/oder Schaumstoffabfälle mit einem flüssigen, schaumbildenden Einkomponenten-Prepolymeren in einem Verhältnis von Schaumstoffresten und/oder Schaumstoffabfällen zu Prepolymeren im Bereich von 95 bis 80 : 5 bis 20 Vol.-%;
(c) Entfernung von gegebenenfalls vorhandenem überschüssigem, nicht benetzendem Prepolymeren;
(d) Starten der Polymerisationsreaktion des Prepolymers durch Einrühren von Wasser in einem Gewichtsverhältnis von Wasser zu Prepolymeren im Bereich von 0,5 bis 2,5 : 1 unter Homogenisierung des Gemisches und
(e) Ausschäumen in der gewünschten Form.

2. Verfahren nach Anspruch 1, dadurch gekennzeichnet, daß als Schaumstoffreste und/oder Schaumstoffabfälle Polystyrol, Polyvinylchlorid, Polyethylen, Harnstoff-Formaldehyd, Phenol-Formaldehyd-Harz, Silicon-Harz und/oder deren Gemische eingesetzt werden.

3. Verfahren nach Anspruch 1 oder 2, gekennzeichnet durch mechanische Zerkleinerung der Schaumstoffreste und/oder Schaumstoffabfälle auf eine Partikelgröße von weniger oder gleich 5 mm.

4. Verfahren nach einem oder mehreren der Ansprüche 1 bis 3, dadurch gekennzeichnet, daß als flüssiges, schaumbildendes Einkomponenten-Prepolymeres ein Einkomponenten-Polyurethansystem eingesetzt wird.

5. Verfahren nach einem oder mehreren der Ansprüche 1 bis 4, dadurch gekennzeichnet, daß das Gewichtsverhältnis von Wasser zu Prepolymeren im Bereich von 1 bis 1,5 : 1 eingestellt wird.

6. Verfahren nach einem oder mehreren der Ansprüche 1 bis 5, dadurch gekennzeichnet, daß den Schaumstoffresten und/oder Schaumstoffabfällen und/oder dem Prepolymeren und/oder dem Wasser Abrasiva, Flammverzögerer, Pigmente, Fasern, Faserreste und/oder Detergentien in einer Menge von 0,1 bis 10 Gew.-%, bezogen auf das Endprodukt, zugesetzt werden.

7. Verfahren nach Anspruch 6, dadurch gekennzeichnet, daß dem Einkomponenten-Prepolymeren als Detergens Kernseife in einer Menge von 0,5 Gew.-%, bezogen auf das Endprodukt, zugesetzt wird.

## Claims

1. A process for reclaiming foam off-cuts and/or waste foam by means of
(a) mechanically comminuting the foam off-cuts and/or waste foam to a particle size of equal to or less than 10 mm;
(b) blending the foam off-cuts and/or waste foam with a liquid foam-forming one-component prepolymer in a ratio of foam off-cuts and/or waste foam to prepolymer within a range of from 95 to 80 : 5 to 20% by volume;
(c) removing excessive non-wetting prepolymer, if present;
(d) starting the polymerization reaction of the prepolymer by adding water thereto with stirring in a ratio by weight of water to prepolymer within a range of from 0.5 to 2.5 : 1 while homogenizing the mixture and
(e) foaming same to the desired shape.

2. The process according to claim 1, characterized in that polystyrene, polyvinyl chloride, polyethylene, urea-formaldehyde, phenol-formaldehyde resin, silicone resin and/or mixtures thereof are employed as the foam off-cuts and/or waste foam.

3. The process according to claim 1 or 2, characterized by mechanically comminuting the foam off-cuts and/or waste foam to a particle size of equal to or less than 5 mm.

4. The process according to any one or more of claims 1 to 3, characterized in that a one-component polyurethane system is employed as the liquid foam-forming one-component prepolymer.

5. The process according to any one or more of claims 1 to 4, characterized in that the ratio by weight of water to prepolymer is adjusted within a range of from 1 to 1.5 : 1.

6. The process according to any one or more of claims 1 to 5, characterized in that abrasives, flame retardants, pigments, fibers, fiber residues and/or detergents in an amount of from 0.1 to 10% by weight, relative to the final product, are added to the foam off-cuts and/or waste foam and/or prepolymer and/or water.

7. The process according to claim 6, characterized in that curd soap in an amount of from 0.5% by weight, relative to the final product, is added to the one-component prepolymer as a detergent.

## Revendications

1. Procédé pour récupérer des restes et/ou des déchets de matériau mousse, par
(a) fragmentation mécanique des restes et/ou déchets de matériau mousse à une taille de particules inférieure ou égale à 10 mm;
(b) mélange des restes et/ou déchets de matériau mousse avec un prépolymère liquide moussant à un constituant dans un rapport des restes et/ou déchets de matériau mousse au prépolymère dans la gamme de 95 à 80 : 5 à 20% en volume;
(c) élimination du prépolymère en excès non réticulé, éventuellement présent;
(d) démarrage de la réaction de polymérisation du prépolymère par introduction d'eau dans un rapport pondéral de l'eau au prépolymère dans la gamme de 0,5 à 2,5 : 1 moyennant une homogénéisation du mélange, et
(e) moussage à la forme désirée.

2. Procédé selon la revendication 1, caractérisé en ce qu'on utilise comme restes et/ou déchets de matériau mousse, du polystyrène, du chlorure de polyvinyle, du polyéthylène, de la formaldéhyde-urée, une résine phénolformaldéhyde, une résine silicone et/ou leurs mélanges.

3. Procédé selon la revendication 1 ou 2, caractérisé par une fragmentation mécanique des restes et/ou déchets de matériau mousse à une taille de particules inférieure ou égale à 5 mm.

4. Procédé selon une ou plusieurs des revendications 1 à 3, caractérisé en ce qu'on utilise comme prépolymère liquide moussant à un constituant, un système polyuréthane à un constituant.

5. Procédé selon l'une ou plusieurs des revendications 1 à 4, caractérisé en ce que le rapport pondéral de l'eau au prépolymère est réglé dans la gamme de 1 à 1,5 : 1.

6. Procédé selon l'une ou plusieurs des revendications 1 à 5, caractérisé en ce que des agents abrasifs, des agents retardateurs de flamme, des pigments, des fibres, des restes de fibres et/ou des détergents sont ajoutés, en une quantité de 0,1 à 10% en poids rapportés au produit final, aux restes et/ou déchets de matériau mousse et/ou au prépolymère et/ou à l'eau.

7. Procédé selon la revendication 6, caractérisé en ce qu'on ajoute en tant que détergent du savon de Marseille en une quantité de 0,5% en poids rapportée au produit final, au prépolymère à un constituant.
